# EUROPÄISCHE PATENTANMELDUNG

(11) **EP 0 816 653 A1**
(43) Veröffentlichungstag der Anmeldung: **07.01.1998**
(21) Anmeldenummer: 97108079.1
(22) Anmeldetag: 17.05.1997
(51) Int. Cl.: F02B 37/02, F02B 67/10, F01N 7/10

(54) **Anordnung von Abgasturbolader und Abgaskrümmer an einer Brennkraftmaschine**

(30) Priorität: 28.06.1996 DE 19625990
(71) Anmelder: DAIMLER-BENZ AKTIENGESELLSCHAFT, 70567 Stuttgart (DE)
(72) Erfinder: Lagelstorfer, Kurt, 71364 Winnenden (DE)

(57) **Zusammenfassung**

Die Erfindung bezieht sich auf eine Anordnung von Abgasturbolader (1) und Abgaskrümmer (2) an eine mehrzylindrige Brennkraftmaschine, wobei der Abgaskrümmer (2) über Befestigungsflansche (9) an einen Zylinderkopf der Brennkraftmaschine angeschlossene Abgasleitungen (11) und einen Sammelraum (12) umfaßt, an den der Abgasturbolader (1) über einen Flansch (15) angeschlossen ist.
Um eine Anordnung von Abgasturbolader (1) und Abgaskrümmer (2) an einer Brennkraftmaschine so auszubilden, daß eine kompakte Bauweise bei gleichzeitig verbesserter Montierbarkeit der Anordnung ermöglicht ist, wird erfindungsgemäß vorgeschlagen, daß der Flansch (15) in einem einer Stirnseite der Brennkraftmaschine zugewandten Bereich des Abgaskrümmers (2) angeordnet und von einer den Sammelraum (12) schneidenden Ebene (16) normal zur Motorhochachse (17) im wesentlichen in Richtung zu einem Zylinderblock der Brennkraftmaschine beabstandet ist.

## Beschreibung

Die Erfindung bezieht sich auf eine Anordnung von Abgasturbolader und Abgaskrümmer an einer mehrzylindrigen Brennkraftmaschine gemäß dem Oberbegriff des Patentanspruchs 1.

Aus der DE 36 41 550 C1 ist eine gattungsgemäße Anordnung von Abgasturbolader, Abblasventil und Abgaskrümmer an einer mehrzylindrigen Brennkraftmaschine bekannt, wobei an den Zylinderkopf angeschlossene Einzelrohre des Abgaskrümmers in einen Sammelabschnitt münden, an den das Turbinengehäuse des Abgasturboladers angeschlossen ist. Dabei liegt der Anschlußflansch für den Abgasturbolader mittig am Zylinderblock an und die Einzelrohre erstrecken sich in einer seitlich ausladenden Anordnung am Zylinderkopf. Somit ist die Unterbringung der Anordnung bei engen Platzverhältnissen im Motorraum problematisch, insbesondere die Anbringung weiterer Bauteile innerhalb des Bauraumes der Anordnung.

Zum allgemeinen technischen Hintergrund wird noch auf die DE 32 08 478 C2 verwiesen.

Es ist die Aufgabe der Erfindung eine Anordnung von Abgasturbolader und Abgaskrümmer an einer Brennkraftmaschine derart auszubilden, daß eine kompakte Bauweise bei gleichzeitig verbesserter Montierbarkeit dar Anordnung ermöglicht ist.

Diese Aufgabe wird erfindungsgemäß durch die im Kennzeichen des Patentanspruchs 1 gegebenen Merkmale gelöst.

Ein wesentlicher Vorteil der Erfindung besteht in der kompakten Bauweise der Anordnung, insbesondere des Abgaskrümmers hinsichtlich der Erstreckung in Motorquerachsenrichtung sowie der Unterbringung weiterer Bauteile auf engstem Raum bei gleichzeitiger Zugänglichkeit aller Schrauben der Anordnung. Durch die dezentrale Anordnung des Abgasturboladers in einem einer Stirnseite der Brennkraftmaschine zugewandten Bereich des Zylinderblocks bleibt ein Freiraum unterhalb des Abgaskrümmers und seitlich des Abgasturboladers zum Einbau eines weiteren Bauteils, wie beispielsweise eines Katalysators. Die Anbringung des Abgaskrümmers unmittelbar am Zylinderkopf und die besondere Ausgestaltung des Flansches zur Anbindung an den Abgasturbolader ermöglichen kurze Abgasleitungen zwischen den Abgasauslässen des Zylinderkopfes und dem Sammelraum des Abgaskrümmers. Dadurch werden gesonderte Abgasleitungen zwischen dem Zylinderblock und dem Abgasturbolader und damit ein größerer, beispielsweise seitlich weiter ausladender Bauraumbedarf der Anordnung vermieden. Der Flansch des Abgaskrümmers ist derart angeordnet, daß eine Montageerleichterung des an einer dem Zylinderblock der Brennkraftmaschine zugewandten Seite des Abgasturboladers angeordneten Generators ermöglicht ist. Sämtliche Schrauben der Anordnung sind jederzeit zugänglich, so daß die Einbaureihenfolge des Generators beliebig wählbar ist und eine schnelle, einfache Montage der Anordnung erfolgen kann.

In Ausgestaltung der Erfindung ist nach Anspruch 3 eine Neigung des Flansches vorgesehen, die eine Befestigung des Abgasturboladers direkt unterhalb des Abgaskrümmers ermöglicht, wodurch eine weitere Reduzierung des Bauraumbedarfs der Anordnung erreichbar ist.

Die Ausgestaltung der Erfindung nach Anspruch 5 ermöglicht einen maximalen Querschnitt der Öffnung des Flansches bei Einhaltung der durch die Schraubenauflageflächen und die Wände des Sammelraumes gegebenen Grenzen und dadurch ein Einströmen auch großer Abgasmengen in die Turbine des Abgasturboladers.

Durch die erfindungsgemäße Ausgestaltung der Anschlußöffnung, wie nach Anspruch 6 vorgesehen, ergibt sich eine günstige, übergangsfreie Einströmung der Abgase vom Sammelraum des Abgaskrümmers in die Anschlußleitung der Turbine des Abgasturboladers mit nur minimalen Strömungsverlusten. Da die Anschlußöffnung des Abgasturbolader-Anschlußflansches der Öffnung des Abgaskrümmmer-Flansches entspricht, wodurch die Wand des Sammelraumes bündig mit der Wand der Anschlußleitung ist, sind die Strömungsverluste auf ein Mindestmaß reduziert. Im weiteren Verlauf weist die Anschlußleitung bis zum Eintritt in die Turbine des Abgasturboladers einen kreisförmigen Querschnitt auf. Um die Einströmung der Abgase in die Turbine des Abgasturboladers weiter zu verbessern, kann die Anschlußöffnung des Anschlußflansches etwas größer als die Öffnung des Flansches sein, wodurch bei einem etwaigen Verrutschen oder Gußversatz der beiden Flansche ein Hineinragen der Kanten der Anschlußöffnung in die Öffnung vermieden wird.

Die Ausgestaltung der erfindungsgemäßen Anordnung nach Anspruch 8 ermöglicht eine weitere Montageerleichterung des Abgaskrümmers, da die dem Flansch zur Befestigung des Abgasturboladers zugewandte Schraube des unmittelbar vor der Kröpfung des Abgaskrümmers angeordneten Befestigungsflansches auch bei am Abgaskrümmer vormontiertem Abgasturbolader zugänglich ist.

Weitere Ausgestaltungen der Erfindung gehen aus den übrigen Unteransprüchen und der Beschreibung hervor.

In den Zeichnungen ist die Erfindung anhand eines Ausführungsbeispieles erläutert. Es zeigen:
- Fig. 1: eine Seitenansicht einer erfindungsgemäßen Anordnung von Abgaskrümmer und Abgasturbolader an einer mehrzylindrigen Brennkraftmaschine,
- Fig. 2: eine Seitenansicht des Abgaskrümmers aus Fig. 1 mit Befestigungsflanschen, einem Sammelraum und einem Flansch zur Verbindung des Abgaskrümmers mit dem Abgasturbolader und
- Fig. 3: eine Vorderansicht des Abgaskrümmers aus Fig. 1 und 2 mit einer gegenüber von Anschlußflächen der Befestigungsflansche geneigten Anschlußfläche des Flansches zur Befestigung des Abgasturboladers.

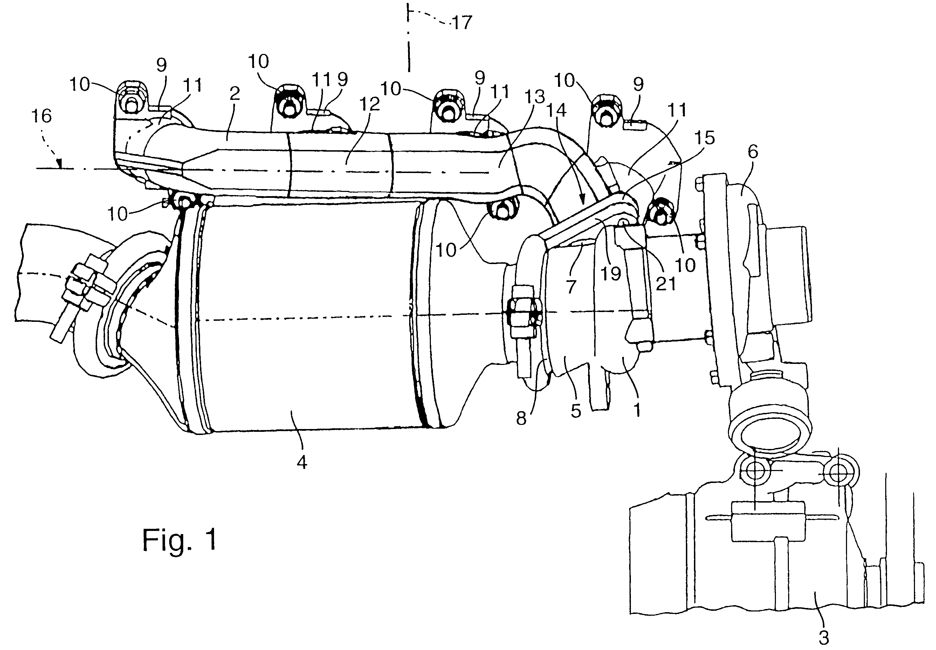

Fig. 1 zeigt eine Anordnung von Abgasturbolader 1 und Abgaskrümmer 2 an einer nicht dargestellten mehrzylindrigen Brennkraftmaschine, wobei unterhalb des Abgasturboladers 1 ein Generator 3 und unterhalb des Abgaskrümmers 2 ein Katalysator 4 an einem nicht dargestellten Zylinderblock angeordnet sind. Der an dem Zylinderblock der Brennkraftmaschine angeordnete Abgasturbolader 1 umfaßt eine Abgasturbine 5 und einen Ladeluftverdichter 6, die mit einer gemeinsamen Welle drehfest verbunden sind. Der Abgaskrümmer 2 ist mit einem Einströmstutzen 7 des Abgasturboladers 1 und der Katalysator 4 mit einem Ausströmstutzen 8 des Abgasturboladers 1 verbunden.

An einer Abgasauslässe aufweisenden Seite eines nicht dargestellten Zylinderkopfes der Brennkraftmaschine sind Befestigungsflansche 9 des Abgaskrümmers 2 mittels Schrauben 10 gasdicht befestigt. Die Abgasauslässe fluchten mit entsprechenden, nicht dargestellten Öffnungen, die an den Befestigungsflanschen 9 des Abgaskrümmers 2 ausgebildet sind. Der Abgaskrümmer 2 umfaßt Abgasleitungen 11, die mit den Befestigungsflanschen 9 an der Brennkraftmaschine befestigt sind und in einen Sammelraum 12 des Abgaskrümmers 2 geführt sind.

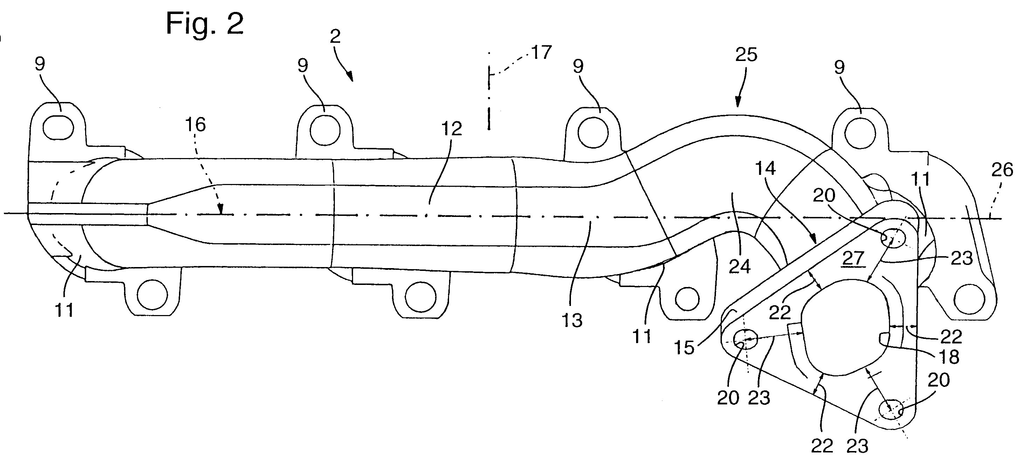

Der Abgaskrümmer 2 weist an einer den Abgasleitungen 11 abgewandten, im wesentlichen gegenüberliegenden Seite 13 und an einem einer Stirnseite der Brennkraftmaschine zugewandten Bereich 14 einen Flansch 15 auf, der von einer den Sammelraum 12 schneidenden Ebene 16 normal zu einer Motorhochachse 17 im wesentlichen in Richtung zu dem Zylinderblock beabstandet ist. Der Flansch 15 ist über eine Öffnung 18 (siehe Fig. 2) mit einem Anschlußflansch 19 des Einströmstutzens 7 der Abgasturbine 5 verbunden.

Der in Fig. 2 genauer dargestellte Flansch 15 hat einen im wesentlichen dreieckigen Umriß mit abgerundeten Ecken, wobei sich Schraubenlöcher 20 in den Eckbereichen befinden. Durch die Schraubenlöcher 20 des Flansches 15 sind in montiertem Zustand Schrauben gesteckt, die in mit den Schraubenlöchern 20 fluchtende Gewindelöcher 21 (siehe Fig. 1) des Anschlußflansches 19 eingeschraubt sind. Dadurch ergibt sich eine feste Verbindung der beiden zusammenwirkenden Flansche 15 und 19 des Abgaskrümmers 2 und des Abgasturboladers 1.

Die Öffnung 18 des Flansches 15 ist in etwa oval und erhält ihre charakteristische Form durch einen möglichst großen Querschnitt, der durch einzuhaltende Wanddicken 22 und Abstände 23 zwischen der Öffnung 18 und den Schraubenlöchern 20 begrenzt ist. Eine nicht dargestellte Anschlußöffnung des Anschlußflansches 19 weist einen der ovalen Öffnung 18 des Flansches 15 entsprechenden Querschnitt auf, der über eine Länge einer nicht dargestellten Anschlußleitung an den Abgasturbolader 1 bis zum Eintritt in die Spirale der Abgasturbine 5 in einen kreisförmigen Querschnitt übergeht. Der Querschnitt der Anschlußöffnung ist über seinen gesamten Umfang etwas größer als der Querschnitt der Öffnung 18, um bei einem etwaigen Verrutschen oder Gußversatz der beiden Flansche 15 und 19 eine in die Öffnung 18 hineinragende Kante der Anschlußöffnung im Einströmbereich zu verhindern.

Um den Flansch 15 zur Befestigung des Abgasturboladers 1 in eine vorbestimmte Lage zu bringen, weist der Abgaskrümmer 2 an einem dem Flansch 15 zugewandten Ende 24 eine Kröpfung 25 auf, wodurch der Abgaskrümmer 2 ausgehend von einer Richtung einer Motorlängsachse 26 in Richtung der Motorhochachse 17 gebogen ist und dadurch eine Drehung des Flansches 15 in Richtung des Zylinderblocks erfolgt und gleichzeitig ein möglichst großer Strömungsquerschnitt in dem zum Flansch 15 führenden Leitungsteil des Abgaskrümmers 2 erhalten bleibt.

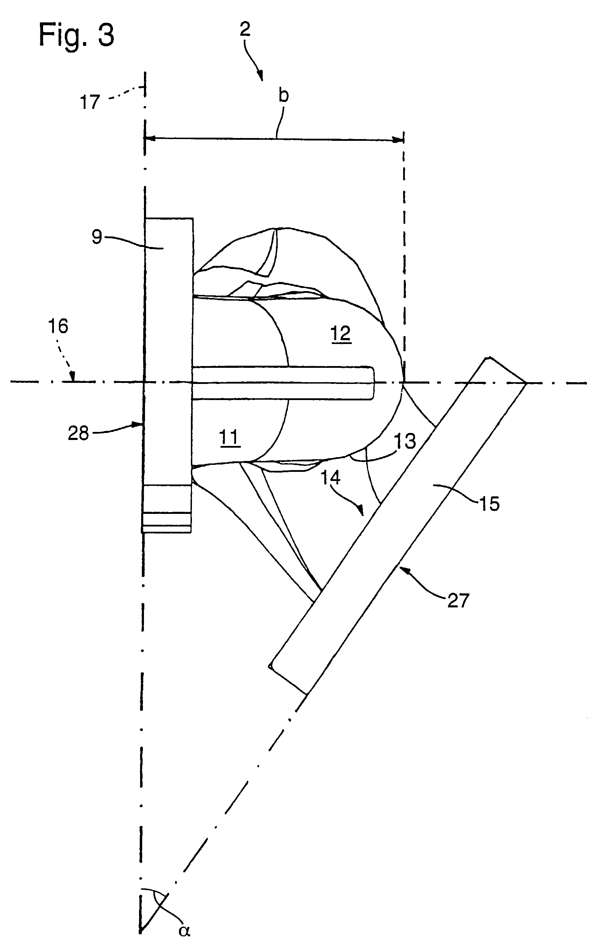

Fig. 3 zeigt den Flansch 15, dessen Anschlußfläche 27 gegenüber Anschlußflächen 28 der Befestigungsflansche 9 des Abgaskrümmers 2 in einem nach oben hin offenen Winkel α geneigt ist. Die senkrecht zu den Anschlußflächen 28 der Befestigungsflansche 9 verlaufende Breite b des Abgaskrümmers 2 ist in Richtung der Motorlängsachse 26 im wesentlichen gleich.

## Patentansprüche

1. Anordnung von Abgasturbolader und Abgaskrümmer an eine mehrzylindrige Brennkraftmaschine, wobei der Abgaskrümmer über Befestigungsflansche an einen Zylinderkopf der Brennkraftmaschine angeschlossene Abgasleitungen und einen Sammelraum umfaßt, an den der Abgasturbolader über einen Flansch angeschlossen ist,
**dadurch gekennzeichnet**,
**daß** der Flansch (15) in einem einer Stirnseite der Brennkraftmaschine zugewandten Bereich (14) des Abgaskrümmers (2) angeordnet und von einer den Sammelraum (12) schneidenden Ebene (16) normal zur Motorhochachse (17) im wesentlichen in Richtung zu einem Zylinderblock der Brennkraftmaschine beabstandet ist.

2. Anordnung nach Anspruch 1,
**dadurch gekennzeichnet**,
**daß** der Flansch (15) an einer den Abgasleitungen (11) im wesentlichen gegenüberliegenden Seite (13) des Abgaskrümmers (2) angeordnet ist.

3. Anordnung nach Anspruch 1 oder 2,
**dadurch gekennzeichnet**,
**daß** eine Anschlußfläche (27) des Flansches (15) gegenüber Anschlußflächen (28) der Befestigungsflansche (9) des Abgaskrümmers (2) geneigt ist.

4. Anordnung nach Anspruch 1 bis 3,
**dadurch gekennzeichnet**,
**daß** eine Öffnung (18) des Flansches (15) durch vorbestimmte Wanddicken (22) und vorbestimmte Abstände (23) zwischen der Öffnung (18) und Schraubenlöchern (20) des Flansches (15) begrenzt ist.

5. Anordnung nach einem der Ansprüche 1 bis 4,
**dadurch gekennzeichnet**,
**daß** die Öffnung (18) des Flansches (15) in etwa oval ist.

6. Anordnung nach einem der Ansprüche 1 bis 5,
**dadurch gekennzeichnet**,
**daß** eine Anschlußöffnung eines Anschlußflansches des Abgasturboladers (1) der Öffnung (18) des Flansches (15) des Abgaskrümmers (2) entspricht.

7. Anordnung nach einem der Ansprüche 1 bis 6,
**dadurch gekennzeichnet**,
**daß** an einem Abgaskrümmer (2) ein von der den Sammelraum (12) schneidenden Ebene (16) des Abgaskrümmers (2) im wesentlichen in Richtung zum Zylinderblock der Brennkraftmaschine beabstandeter Katalysator (4) angeordnet ist.

8. Anordnung nach einem der Ansprüche 1 bis 7,
**dadurch gekennzeichnet**,
**daß** der Abgaskrümmer (2) an einem dem Flansch (15) zugewandten Ende (24) eine Kröpfung (25) aufweist.
